# EUROPEAN PATENT APPLICATION

(11) **EP 3 316 061 A1**
(43) Date of publication of application: **02.05.2018**
(21) Application number: 16196507.4
(22) Date of filing: 31.10.2016
(51) Int. Cl.: G05B 19/418, B22D 11/16, G01N 25/72, G01N 33/20

(54) **PROCEDURE FOR PREDICTING THE MECHANICAL PROPERTIES OF PIECES OBTAINED BY CASTING**

(71) Applicant: Fundacion Deusto, 48007 Bilbao (Vizcaya) (ES); Universidad de Deusto, 48007 Bilbao (Vizcaya) (ES); Casa Maristas Azterlan, 48200 Durango, Vizcaya (ES)
(72) Inventor: NIEVES ACEDO, Javier, 48200 Durango -Bizkaia (ES); ZABALA URIARTE, Argoitz, 48200 Durango - Bizkaia (ES); SANTOS GRUEIRO, Igor, 48007 Bilbao-Bizkaia (ES); GARCIA BRINGAS, Pablo, 48007 Bilbao-Bizkaia (ES)
(74) Representative: Ezcurra Zufia, Maria Antonia

(57) **Abstract**

Procedure that enables future mechanical properties to be determined based on real-time observation of the process variables; that allows an in-depth knowledge to be gained of the production process, based on the qualitative conclusions furnished by the analysis models to the factory's engineering team and that moreover enables advance prediction of the presence of flaws or unacceptable mechanical properties in a manufacturing batch. It comprises the stages of:
a) Data gathering
b) Preprocessing, consisting of:
a. Elimination of noise components, by means of Bayesian compression and singular value decomposition;
b. Selection of variables by means of factorial analysis and expert knowledge

c) Cross-checking
d) Learning of analysis models in which a process of prediction is performed by sole classifier or by a combination of the classifiers
e) Tests of the model and measurements made

## Description

### OBJECT OF THE INVENTION

The object of the present invention, as established in the title of the invention, is a procedure for predicting the mechanical properties of pieces obtained by casting, that is to say, it establishes a procedure that enables the future mechanical properties to be determined based on real-time observation of process variables.

The present invention is characterised in that it combines, on the one hand, the measurement of a number of input variables during the manufacturing process, and on the other, the subsequent processing of the data obtained according to different statistical criteria and criteria of selection of variables such that it makes it possible to predict when a manufacturing batch is going to suffer defects or unacceptable mechanical properties, allowing the avoidance of continued work on unacceptable batches, with a subsequent saving in financial, energy and environmental costs.

The present invention therefore lies within the ambit of the procedures used to predict manufacturing faults in pieces based on data obtained during the manufacturing process.

### BACKGROUND TO THE INVENTION

A large number of variables are involved in the manufacturing processes, and the results obtained depend on the values achieved by these variables and by the correlation between the different variables.

In product manufacture, attention is always paid to the possible future performance of pieces manufactured, based on the values of the variables involved in the manufacturing process. However, on occasions, not all the variables involved in the manufacturing process are taken into account, and/or on other occasions the large number of correlations that might occur are not taken into account, all as a consequence of the great quantity of variables and the large number of possible cross-correlations between variables. As a consequence, it is difficult reliably to predict the future performance of the parts manufactured.

The object of the present invention is therefore to develop a procedure for predicting the mechanical properties that will improve on the results obtained to date, using for this purpose a larger number of input variables and a multiplicity of successive steps which by working on the data obtained makes it possible qualitatively to increase the reliability of the prediction obtained.

### DESCRIPTION OF THE INVENTION

The object of the present invention is a procedure for predicting the mechanical properties of parts obtained by casting.

The casting process essentially involves the following stages:
- Development of patterns for manufacturing moulds.
- Manufacture of moulds
- Smelting and casting
- Cooling and separation
- Finishing
- Quality Control.

Throughout the above process, information is taken on the real time values of the different variables in the process, giving up to 400 process variables.

In general, process variables may be divided into two large groups:
a.- Variables related to the composition of the metal.
   - Chemical composition, inoculation, treatment types, costs
   - Quality of the potential nucleation mixture : thermal analysis parameters
   - Pouring: duration of the casting process and temperature.
b.- Variables related to the properties of the mould:
   - Sand: type of additives, specific characteristics of the sand, performance of preliminary tests
   - Moulding: configuration parameters of moulding machine.

Using these variables, measured in real time during the process, an attempt is made to predict the following characteristics:
- appearance of microporosity or microshrinkage. Microshrinkage, also known as secondary contraction, is a defect or irregularity in castings that tends to appear in the cooling stage. Specifically, this defect consists of a form of shrinkage involving a large number of very small cavities which they may be distributed across a large area of the casting.

The primary reason for the appearance of this defect is that metals are less dense in liquid than solid form and during the cooling process the density of the metal increases as the volume decreases, leading to the possible appearance of these interdendritic porosities that reduce the hardness of the casting, making it unsuitable for use.

The greatest problem with this flaw is that it cannot be detected until the finished part is analysed. The processes currently used to determine the existence of this type of flaw are based on the use of X-rays or ultrasound emissions, avoiding the need for destructive inspections, i.e. making it unnecessary to destroy a specimen to perform the tests.

In order to classify the specimens, a series of levels of possible risk have been defined.
- Risk 0: no microshrinkage predicted.
- Risk 1: minimal likelihood of microshrinkage.
- Risk 2: low probability of some microshrinkage appearing in the part.
- Risk 3: microshrinkage in the part is almost guaranteed. Of the four levels defined, risk 0 and risk 1 represent no problem for the process. However, risk 2 begins to call for alteration to prevent the flaw. And finally, at risk 3 level production parameters must unavoidably be changed

### - Mechanical properties

After the production process, the parts will be subjected during their life to a series of loads and forces. Specialist engineers need to make the relevant measurements to determine how the part is going to perform; in other words, whether it is going to warp or break during use due to the forces applied to it. These characteristics are known as mechanical properties and it is extremely important to know how they affect cast parts.

Mechanical properties can be grouped into the following categories:
- Strength: the property that allows a metal to resist deformation under load. There are many kinds of strength such as breaking strength and tensile strength.
- Hardness: the property to resist permanent indentation.
- Toughness: the property that allows a material to withstand an impact without deformation or breakage. Toughness is considered to be a combination of resistance and plasticity.
- Resistance: the property of a material to absorb energy when elastically deformed.
- Elasticity: the ability of a material to return to its original shape after removal of a load that has deformed it.
- Plasticity: the capacity of a material to be permanently deformed without breaking.
- Brittleness: a brittle material is one that breaks before suffering deformation. Generally, brittle materials have high compression strength but low tensile strength.
- Ductility: the property that allows a material to be stretched, folded or rotated without cracking or breaking.
- Malleability: as opposed to ductility, this is the property that allows a material to deform under compressive stresses without developing flaws. A malleable material can be sealed, hammered, forged, pressed or rolled into thin sheets.

Thanks to the procedure that forms the object of the invention, the method makes it possible to determine the final result of the mechanical properties before the manufacturing process is completed.

The analysis procedure described improves the results of the casting process, on the basis of the following contributions:
- It enables advance prediction of the presence of flaws or unacceptable mechanical properties in a manufacturing batch.
   - Given that a batch is withdrawn from the production line as soon as it is identified as being unacceptable, the advance warning achieved makes it possible to avoid performing production tasks on non-compliant batches. Large savings are achieved by not performing tasks that would have produced no profit, as they would be applied to unmarketable batches.
   - One especially important cost is that related to energy.
   - Equally important is the environmental cost.
- It allows an in-depth knowledge to be gained of the production process, based on the qualitative conclusions furnished by the analysis models to the factory's engineering team.

Unless otherwise indicated, all technical and scientific elements used in this specification have the meaning habitually understood by a person skilled in the art to which this invention pertains. In the practice of the present invention, similar or equivalent procedures and materials to those described in the specification may be used.

Throughout the description and the claims the word "contains", "comprises" and any variations thereon shall not be intended to exclude other technical characteristics, additives, components or steps. For experts in the field, other objects, advantages and characteristics of the invention will emerge partly from the description and partly from practice with the invention.

### PREFERRED EMBODIMENT OF THE INVENTION.

In view of the figures one form of preferred embodiment of the proposed invention is described below.

The procedure that forms the object of the invention comprises the following stages:
a) Data gathering: consists of continuous measurement, from the production line, of the values of the process variables. This data gathering can be performed with different degrees of sophistication, ranging from manual data-gathering to automated data-gathering using sensors, and also including various intermediary states.
   The specifics and the number of the variables captured in this stage depend on the manufacturing process. In general, the variables measured are those common in the casting process, namely: temperature, type of inoculant, cooling time, part volume, quantity of magnesium, silicon, manganese, sulphur and phosphorus, and other additives, mould humidity, etc. In general, the production process has more than 400 process variables, grouped into the categories listed above.
b) Preprocessing, consisting of:
   b.1) Elimination of noise components, by means of:
      - Bayesian compression. Machine learning methods, such as Bayesian networks, continue to enjoy great acceptance in research in different fields. Historically, solutions sought using this type of algorithm have been related to diagnoses, predictions and efficient inference. Nonetheless, Bayesian networks may also be used for other purposes, such as compression of data sets without information loss, by means of Monte-Carlo-type simulation of synthetic samples. A Monte Carlo simulation is a synthetic representation of reality performed by repeated sample-talking, normally based on a pseudo-random selection of samples, to determine the properties of a phenomenon or its behaviour. This technique reduces the size of the input data and thus the size of possible noise components in this input.
      - Singular value decomposition. In problems where a certain loss of information may be accepted in exchange for an improvement in input noise components, the technique of decomposition of the sample space in principal or singular components may be used. This is a statistical technique that allows the causes influencing a given result to be ordered by importance and proportion. It generally involves calculating the statistical correlation between the different variables in the input data set, and ordering them on the basis of this correlation. Once the variables have been computed on the basis of their importance, it may be possible simply to reject the least relevant ones, thus reducing the size and subsequently the noise
   b.2) Selection of variables, using:
      - Factorial analysis of causes related to a given effect.
      - Selection of variables through application of expert knowledge.
c) Cross-checking. Cross-checking is a technique used to exhaustively assess the results of a statistical analysis, in order to ensure that the training data and results of a test are independent, and that therefore the precise properties achieved are maintained even when, when already being exploited, the same analysis is performed on new data. It consists of repeating and calculating the arithmetic mean obtained from the measurements evaluating different partitions. It is used in environments where the main aim is predictive and the purpose is to estimate how precise a model to be applied in practice will be. In our case the dataset has been divided into a number of K=10 partitions, each containing 10% of the input data. An iterative process is then performed in which a training stage is performed on K-1 partitions (90% of the data), followed by a stage involving checking the remaining partition (10%). By repeating this process 10 times, the complete input dataset is ultimately used, both to statistically train the models and to check that they are correct.
d) Learning of analysis models, in which a prediction process is performed, which may be:
   i. Prediction of the output variables (variables in mechanical properties and quality) by a sole classifier using one or several of the following prediction models. If more than one method is used, a subsequent combination method must be applied, in order finally to obtain a single response:
      - Bayesian networks: K2, Hill Climbing, TAN, Naïve Bayes.
      - k-Nearest Neighbours, k-NN: with K from 1 to 5.
      - Neural Networks, ANN: MLP-BPN.
      - Support Vector Machines, SVMs: with polynomial kernel, normalized polynomial kernel, Pearson VII, and radial basis function (RBF) kernel.
      - Decision Trees: Random Forest, C4.5.
   ii. Prediction of output variables (variables of mechanical properties and quality variables) through a combination of the above classifiers that may be by means of any of the following methods of combination:
      - Combination by voting, by default.
      - response selection or "grading"
      - response transformation or "stacking"
      - Multi-scheme, based on historical response ranking.
      It is possible to test several of the above methods of combination and use the one that gives the best results.
e) Tests of the model and measurements made
   - Principal measurement: precision.
   - Secondary measurements: diverse error rates of possible false positives or negatives.

Having sufficiently described the nature of the present invention, and the means of implementing it, it is noted that within the same essence, it may be made in other embodiments differing in detail from that indicated herein as an example, and to which the protection obtained shall equally extend, provided that it does not alter, change or modify its basic principle.

## Claims

1. Procedure for predicting the mechanical properties of parts obtained by casting, **characterised in that** it contains the following stages:
a) Continuous gathering of data on the values of process variables at any given time.
b) Preprocessing, consisting of:
b.1) Elimination of noise components, by means of:
- Bayesian compression.
- Singular value decomposition, allowing the causes influencing a given result to be ordered by importance and proportion, eliminating the least relevant variables and thus reducing the size and subsequently the noise
b.2) Selection of variables, using:
- Factorial Analysis of causes related to a given effect.
- Selection of variables through application of expert knowledge.
c) Cross-checking.
d) Learning of analysis models, in which a prediction process is performed, which may be:
a. Prediction of the output variables (variables in mechanical properties and quality) by a sole classifier using one or several of the following prediction models. If more than one method is used, a subsequent combination method must be applied, in order finally to obtain a single response:
- Bayesian networks: K2, Hill Climbing, TAN, Naïve Bayes.
- k-Nearest Neighbours, k-NN: with K from 1 to 5.
- Neural Networks, ANN: MLP-BPN.
- Support Vector Machines, SVMs: with polynomial kernel, normalized polynomial kernel, Pearson VII, and radial basis function (RBF) kernel.
- Decision Trees: Random Forest, C4.5.
e) Tests of the model and measurements made
- Principal measurement: precision.
- Secondary measurements: diverse error rates of possible false positives or negatives.

2. Procedure for predicting the mechanical properties of parts obtained by casting, according to Claim 1, **characterised in that** the process variables are those related to the categories of: temperature, type of inoculant, cooling time, part volume, quantity of magnesium, silicon, manganese, sulphur and phosphorus, and other additives, mould humidity.

3. Procedure for predicting the mechanical properties of parts obtained by casting, according to any of the above claims, **characterised in that** for cross-checking the data set it has been divided into a number of K=10 partitions, each with 10% of the input data, and that an iterative process is then performed in which a training stage has been performed on K-1 partitions (on 90% of the data), followed by a validation stage on the remaining partition (10%), with the process being repeated 10 times.

4. Procedure for predicting the mechanical properties of pieces obtained by casting, according to any of the above claims, **characterised in that** the prediction process is performed by a combination of the above classifiers that may be by means of any of the following methods of combination:
- Combination by voting, by default.
- response selection or "grading"
- response transformation or "stacking"
- Multi-scheme, based on historical response ranking.

5. Procedure for predicting the mechanical properties of pieces obtained by casting, according to Claim 4, **characterised in that**
various of the above methods of combination are tested and the one that gives the best results is chosen.
